# EUROPEAN PATENT SPECIFICATION

(11) **EP 0 457 600 B1**
(45) Date of publication and mention of the grant of the patent: **25.09.1996**
(21) Application number: 91304438.4
(22) Date of filing: 17.05.1991
(51) Int. Cl.: B32B 27/08

(54) **Water soluble film**
Wasserlöslicher Film
Film soluble dans l'eau

(30) Priority: 17.05.1990 US 525440; 19.10.1990 US 601494
(43) Date of publication of application: 21.11.1991
(73) Proprietor: W.R. Grace & Co.-Conn., New York, New York 10036 (US)
(72) Inventor: Van Putte, Andrew, Greenville SC 29607 (US)
(74) Representative: TER MEER - MÜLLER - STEINMEISTER & PARTNER

(56) References cited:
- EP-A- 0 142 950
- DE-A- 3 017 246
- US-A- 3 790 067
- DATABASE WPIL; accession nr. 90-167869 (22); Derwent Publications Ltd., London, GB; & JP-A-2108534 (KAO CORP.), 20 April 1990
- DATABASE WPIL, accession nr. 87-113659 (16); Derwent Publications Ltd., London, GB; &JP-A-62060644(NIPPON SYNTH CHEM IND)17March1987

## Description

The present invention relates to a polymeric film, and more particularly to a water soluble film suitable for packaging caustic materials.

Caustic or potentially hazardous materials such as detergents, soaps, pesticides and fertilizers are currently typically packaged in dispensers, such as high density polyethylene bottles, or other containers. After the chemical contents have been used, the dispenser or container must be disposed of in an environmentally safe way. This can be technically difficult and expensive.

Another concern with the use of such caustic or otherwise hazardous chemicals or pesticides is the safety of the user. In installing, using, and disposing of dispensers or containers containing such hazardous chemicals, the safety of the user can be jeopardized if the dispensing or storage system is not properly handled.

EP-A-1 142 950 discloses a body-waste bag constructed from a laminate of a water-soluble polymer film, such as a polyvinyl alcohol or polyethylene oxide film, and a 3-hydroxybutyrate polymer film or coating with the latter on the interior side of the bag. A base, such as sodium hydroxide is added to the contents of the bag to increase the pH to at least about 12.

DE-A-3 017 246 discloses a laundry bag made of an inner layer of a polyvinyl alcohol film soluble in cold water, and an outer layer of polyvinyl alcohol film soluble in warm water.

It is the object of the present invention to provide a polymeric film enabling it to conveniently and effectively store caustic or potentially hazardous chemicals, pesticides and the like in a manner which satisfies both environmental and safety concerns.

The present invention provides a multilayer film which can effectively and efficiently store a quantity of a chemical, including caustic chemicals, and avoid the need of the end user to open a container to create access to the chemical material.

In one aspect, the present invention provides a coextruded film comprising:
a) an outer layer comprising a material selected from the group consisting of fully hydrolyzed polyvinyl alcohol, partially hydrolyzed polyvinyl alcohol, and polyethylene oxide;
b) an intermediate layer comprising a material selected from the group consisting of fully hydrolyzed polyvinyl alcohol, partially hydrolyzed polyvinyl alcohol, and polyethylene oxide; wherein the material of the intermediate layer is different from the material of the outer layer; and
c) an inner layer comprising a material compatible with the contents of a package formed from the film and being selected from the group consisting of acid/acrylate copolymer, styrene maleic anhydride copolymer, ethylene acrylic acid copolymer, ionomer, polyether block amide copolymer, polyhydroxy valeric acid, polyethylene oxide, polyester, copolyester, polyethyloxazoline, and polyurethane.

In another aspect, the present invention provides a method for making the above-mentioned film comprising the step of coextruding the outer layer, the intermediate layer and the inner layer.

In yet another aspect, the present invention provides a water soluble container comprising the above-mentioned film; the film being sealed together to form an enclosure.

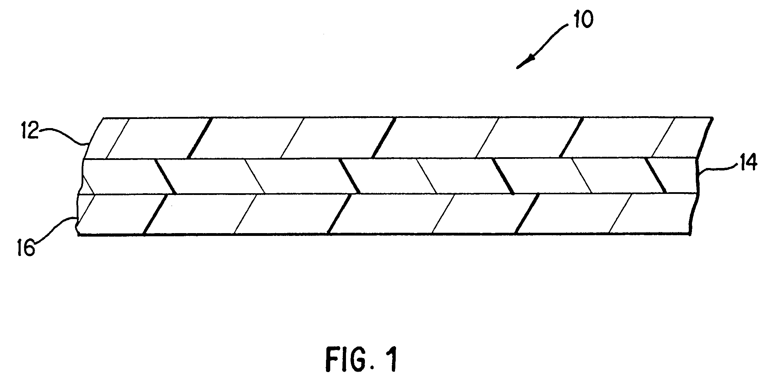

The invention may be further understood with reference to the sole drawing, Figure 1, showing a cross-section of a film of the present invention.

Referring to Figure 1, a water soluble film 10 includes an outher layer 12 of a water soluble polymeric material as specified above.

This outer layer 12 may be a fully hydrolyzed polyvinyl alcohol (PVA) such as Vinex 1003 available from Air Products.

A feature of the fully hydrolyzed PVA of outer layer 12 is that it is insoluble in cold water but increasingly soluble in water at higher temperatures. Typically, at water temperatures above about 120°F fully hydrolyzed PVA such as the Vinex 1003 resin is fully soluble in water.

Outer layer 12 may also be a low melting point, water soluble coating. By "low melting point" is meant a melting point of between about 49 and 82°C (120 and 180°F), more preferably between about 54 and 77°C (130 and 170°F), even more preferably between about 60 and 71°C (140 and 160°F), and most preferably about 66°C (150°F).

Inner layer 16 includes a polymeric material as specified above which is compatible with the contents of a package made from the film. Layer 16 normally will be the innermost layer of a package formed from the film and therefore will be in contact with the caustic chemical, pesticide, fertilizer, etc. which is packaged. The term "caustic" is used herein to mean a chemical or mixture of chemicals with a pH of 7.0 or higher, i.e. alkaline.

By the phrase "compatible with" is meant that the composition of inner layer 16 is such that during normal storage and use, the material of layer 16 will not appreciably decompose or degrade as a result of contact with the package contents. Instead, the material of layer 16 will dissolve when the contents of the container are exposed to water. These contents can include highly caustic chemicals and detergents, pesticides, fertilizers, soaps, and other materials which can aggressively attack some packaging materials.

Suitable materials for layer 16 include acid/acrylate copolymers, preferably methacrylic acid/ethyl acrylate copolymer such as that available from Belland as GBC 2580 and 2600; styrene maleic anhydride copolymer (SMA)(available as Scripset (trademark) from Monsanto); ethylene acrylic acid copolymer (EAA), or metal salt neutralized ethylene methacrylic acid copolymer (EMAA) known as ionomer (available from du Pont), in which the acid content of the EAA or EMAA is at least about 20 mole percent; polyether block amide copolymer; polyhydroxy valeric acid (available as Biopol (trademark)resins from Imperial Chemical Industries); polyethylene oxide; water soluble polyester or copolyester; polyethyloxazoline (PEOX 200 from Dow); and water soluble polyurethane.

Non-polymeric materials such as aluminum may be coated or sputtered onto the water-soluble layer 12.

An intermediate layer 14 is also used in the inventive laminate. Intermediate layer 14 includes a polymeric material as specified above which contributes to the tensile strength of the overall water soluble film. An especially preferred polymeric material for layer 14 is a partially hydrolyzed PVA such as Vinex 2034 available from Air Products. Preferred partially hydrolyzed PVA materials have a degree of hydrolysis of preferably at least about 60%, and more preferably at least about 70%. Most preferably, such partially hydrolyzed PVA materials are hydrolyzed at between 85 and 98% hydrolysis. Such partially hydrolyzed PVA materials are soluble in both cold and hot water.

An alternative material also suitable for intermediate layer 14 is polyethylene oxide, such as that available from Union Carbide as Poly Ox WSR.

Layer 14 can contribute to the tensile strength of the overall film, but also to such properties as bulk and abuse resistance.

The invention may be further understood by reference to the following examples.

### Example 1

A fully hydrolyzed polyvinyl alcohol (Vinex 1003) was coextruded with a partially hydrolyzed polyvinyl alcohol (Vinex 2034), and a methacrylic acid/ethyl acrylate copolymer (Belland GBC 2580).

The annular coextrusion die was set at 204 to 210°C (400 to 410°F). The Vinex 1003 ran at a temperature of about 182 to 205°C (360 to 400°F) (extrusion temperature). The Vinex 2034 resin ran at a temperature of about 190 to 216°C (375 to 420°F). The Belland GBC 2580 ran at a temperature of about 160 to 182°C (320 to 360°F).

The film of Example 1 had a total thickness of about 101.6 µm (4.0 mils), with the outer layer of fully hydrolyzed PVA comprising about 25.4 µm (1 mil); the intermediate layer of partially hydrolyzed PVA comprising about 50.8 µm (2 mils); and the inner contents-compatible layer having a thickness of about 25.4 µm (1 mil).

### Example 2

A film like that of Example 1 is made, but including a water soluble filler in the inner layer.

As used herein "water soluble" refers to a film structure which is preferably totally water soluble. However, films which are substantially water soluble but have relatively minor amounts of a material in the film structure which is not water soluble; films with materials which are water soluble only at relatively high water temperatures or only under limited pH conditions; and films which include a relatively thin layer of water insoluble material, are all included in the term "water soluble".

The film of the present invention offers several advantages. The user does not have to open the package and therefore is not exposed to potentially hazardous contents. In addition, the conventional container is not recyclable and therefore can pose a hazard to the environment from residual contents within the container. The present invention offers a water soluble film which can be formed into a biodegradable package which can be used as is, with the appropriate contents within the package, and without the need for attempting to recycle a container.

In some instances, packages can contain premeasured portions so that no measuring is required and the package can be used as is.

Although the water soluble layer 12 of film 10 preferably is soluble only at relatively high water temperatures, other "triggering" mechanisms may be employed. For example, some resin materials may be water soluble at certain ranges of pH. Thus, resins such as the SMA and EAA or EMAA resins can be incorporated into the film structure at relatively low pH conditions, and thereafter formed into a container which is used in a high pH environment where the water soluble layer will decompose.

In instances where a resin is used which is soluble in water at relatively low temperatures, or is soluble in water at a broader range of pH conditions, the film may be protected from accidental failure (i.e. weakening or dissolving by water) by enclosing the package inside an overwrap material. Such overwrap materials in the form of bags, pouches or the like are well known in the art and are typically made up of polyolefin monolayer or multilayer films or laminates. These overwrap materials can also be made from paper, metal, and substances besides synthetic polymers.

In practicing the present invention, two problems can sometimes occur. First, these films can become tacky over time. Second, the rate of dissolution of the film can be slower than desired. These problems can be overcome to some extent by adding a water soluble filler to one or more resins making up the film. This is preferably done by compounding the agent as a powder into the base resin prior to or during extrusion.

Such fillers can solve the tackiness problem by acting as an antiblock, which reduces blocking and improves processing and converting operations.

Such fillers can also dissolve quickly, promoting dispersion of the polymer. This in turn increases the surface area of the material, speeding up dissolution.

When properly selected, these fillers can also function as a pigment.

Water soluble fillers meeting one or more of these properties (antiblock effect, increased dissolution effect, or pigment-bearing) are included in the base resin preferably in a masterbatch or "fully let down" form. The fillers are preferably of sufficiently small particle size for conversion to film. A particle size of about 5 µm or less is preferred.

The water soluble fillers can be compounded into the base resin on conventional compounding equipment such as a twin screw. Stainless steel cooling belts can be used, instead of water, to cool and/or quench the resulting strands. Such belts are commercially available from Sandvik and Berndorf. The compounded resin can then be used in conventional extrusion operations to produce water soluble film.

Suitable water soluble fillers include any material which is water soluble, or substantially so, and capable of being incorporated into the film structures disclosed in this specification. Preferred materials are salts, and more preferably alkali or alkaline earth salts such as sodium carbonate (Na₂CO₃); sodium sulfate (Na₂SO₄); sodium chloride (NaCl); potassium carbonate (K₂CO₃); potassium sulfate (K₂SO₄); and potassium chloride (KCl).

One or more of these water soluble fillers can be included in one or more of the layers of the water soluble film of the invention. The filler can be present in any suitable concentration in a given layer. Optimal concentrations will be governed to some extent by the nature of the filler, the nature of the base resin, the specific end use of the film, processing and packaging equipment, and other factors. A preferred concentration of the filler or fillers for a given layer of the film is between about 100 parts per million (0.01%) and 200,000 parts per million (20%) by total weight of the layer. Alternatively, the film as a whole may comprise from 0.01% to 20% by weight of a filler, such as a water soluble salt.

## Claims

1. A coextruded film comprising:
a) an outer layer comprising a material selected from the group consisting of fully hydrolyzed polyvinyl alcohol, partially hydrolyzed polyvinyl alcohol, and polyethylene oxide;
b) an intermediate layer comprising a material selected from the group consisting of fully hydrolyzed polyvinyl alcohol, partially hydrolyzed polyvinyl alcohol, and polyethylene oxide; wherein the material of the intermediate layer is different from the material of the outer layer; and
c) an inner layer comprising a material compatible with the contents of a package formed from the film and being selected from the group consisting of acid/acrylate copolymer, styrene maleic anhydride copolymer, ethylene acrylic acid copolymer, ionomer, polyether block amide copolymer, polyhydroxy valeric acid, polyethylene oxide, polyester, copolyester, polyethyloxazoline, and polyurethane.

2. The film according to claim 1 wherein the outer layer is water soluble at temperatures above about 49°C (120°F), but substantially water insoluble at room temperature.

3. The film according to claim 1 or 2 wherein at least one of the layers of the film comprises a water soluble salt.

4. The film according to claim 3 wherein the salt is an alkali or alkaline earth metal salt.

5. The film according to claim 4 wherein the salt is sodium carbonate, sodium sulfate, sodium chloride, potassium carbonate, potassium sulfate or potassium chloride.

6. The film according to any one of claims 3 to 5 wherein at least one of the layers of the film comprises from 0.01 % to 20 % by weigth of the salt.

7. The film according to any one of the preceding claims which is sealed to itself to form an enclosure.

8. A method for making a film as claimed in any one of claims 1 to 7 comprising the step of coextruding the outer layer, the intermediate layer and the inner layer.

9. The method according to claim 8 further comprising the step of mixing a water soluble filler with at least one of the polymeric materials prior to, or simultaneous with, the extrusion of the outer and inner layers.

10. A water soluble container comprising a film as claimed in any one of claims 1 to 7.

## Patentansprüche

1. Koextrudierte Folie, umfassend:
a) eine Außenschicht, umfassend ein aus dervollständig hydrolysierter Polyvinylalkohol, teilweise hydrolysierter Polyvinylalkohol und Polyethylenoxid umfassenden Gruppe gewähltes Material;
b) eine Zwischenschicht, umfassend ein aus der vollständig hydrolysierter Polyvinylalkohol, teilweise hydrolysierter Polyvinylalkohol und Polyethylenoxid umfassenden Gruppe gewähltes Material; wobei das Material der Zwischenschicht von dem Material der Außenschicht verschieden ist; und
c) eine Innenschicht, umfassend ein mit den Inhalten einer aus der Folie gebildeten Packungverträgliches Material, welches aus der Säure/Acrylat-Copolymer, Styrol-Maleinsäureanhydrid-Copolymer, Ethylen-Acrylsäure-Copolymer, Ionomer, Polyether-Blockamid-Copolymer, Polyhydroxyvalerinsäure, Polyethylenoxid, Polyester, Copolyester, Polyethyloxazolin und Polyurethan umfassenden Gruppe gewählt ist.

2. Folie nach Anspruch 1, wobei die Außenschicht bei Temperaturen oberhalb etwa 49°C (120°F) wasserlöslich, jedoch bei Raumtemperatur im wesentlichen wasserunlöslich ist.

3. Folie nach Anspruch 1 oder 2, wobei mindestens eine der Schichten der Folie ein wasserlösliches Salz umfaßt.

4. Folie nach Anspruch 3, wobei das Salz ein Alkali- oder Erdalkalimetallsalz ist.

5. Folie nach Anspruch 4, wobei das Salz Natriumcarbonat, Natriumsulfat, Natriumchlorid, Kaliumcarbonat, Kaliumsulfat oder Kaliumchlorid ist.

6. Folie nach mindestens einem der Ansprüche 3 bis 5, wobei mindestens eine der Schichten der Folie 0,01 bis 20 Gew.-% des Salzes umfaßt.

7. Folie nach mindestens einem der vorangehenden Ansprüche, welche mit sich selbst versiegelt ist, um eine Umschließung zu bilden.

8. Verfahren zur Herstellung einer Folie gemäß mindestens einem der Ansprüche 1 bis 7, umfassend den Schritt des Koextrudierens der Außenschicht, der Zwischenschicht und der Innenschicht.

9. Verfahren nach Anspruch 8, umfassend weiterhin den Schritt des Vermischens eines wasserlöslichen Füllstoffes mit mindestens einem der polymeren Materialien vor oder gleichzeitig mit der Extrusion der Außen- und Innenschicht.

10. Wasserlösliches Behältnis, umfassend eine Folie gemäß mindestens einem der Ansprüche 1 bis 7.

## Revendications

1. Film coextrudé comprenant :
a) une couche externe comprenant un matériau choisi dans le groupe constitué des poly(alcools vinyliques) complètement hydrolysés, des poly(alcools vinyliques) partiellement hydrolysés et des poly(oxyde d'éthylène);
b) une couche intermédiaire comprenant un matériau choisi dans le groupe constitué des poly(alcools vinyliques) complètement hydrolysés, des poly(alcools vinyliques) partiellement hydrolysés et des poly(oxyde d'éthylène), le matériau de la couche intermédiaire étant différent du matériau de la couche externe; et
c) une couche interne comprenant un matériau compatible avec le contenu de l'emballage obtenu à partir du film et sélectionné dans le groupe constitué des copolymères acide/acrylate, des copolymères styrène/anhydride maléique, des copolymères éthylène/acide acrylique, des ionomères, des copolymères séquencés poly-éther-amide, des poly(acide hydroxyvalérique), des poly(oxyde d'éthylène), des polyesters, des copolyesters, des poly(éthyloxazoline), et des polyuréthanes.

2. Film selon la revendication 1 dans lequel la couche externe est hydrosoluble à des températures supérieures à 49° C (120° F), mais pratiquement insoluble dans l'eau à température ambiante.

3. Film selon la revendication 1 ou la revendication 2 dans lequel au moins l'une des couches du film comprend un sel hydrosoluble.

4. Film selon la revendication 3 dans lequel le sel est un sel de métal alcalin ou alcalino-terreux.

5. Film selon la revendication 4 dans lequel le sel est le carbonate de sodium, le sulfate de sodium, le chlorure de sodium, le carbonate de potassium, le sulfate de potassium ou le chlorure de potassium.

6. Film selon lune quelconque des revendications 3 à 5, dans lequel au moins une des couches du film comprend de 0,01 à 20 % en poids du sel.

7. Film selon l'une quelconque des revendications précédentes qui est soudé de façon à former une enveloppe.

8. Procédé pour la préparation d'un film selon l'une quelconque des revendications 1 à 7 comprenant l'étape consistant à coextruder la couche externe, la couche intermédiaire et la couche interne.

9. Procédé selon la revendication 8 comprenant en outre l'étape consistant à mélanger une charge hydrosoluble avec au moins un des matériaux polymères avant, ou pendant l'extrusion des couches externe et interne.

10. Contenant hydrosoluble comprenant un film selon l'une quelconque des revendications 1 à 7.
